Europäisches Patentamt

European Patent Office

Office européen des brevets

(11) Publication number: **0 152 269**
**B1**

# EUROPEAN PATENT SPECIFICATION

(45) Date of publication of patent specification: **18.04.90**

(21) Application number: **85300775.5**

(22) Date of filing: **06.02.85**

(51) Int. Cl.⁵: **G 11 B 11/10, G 11 B 5/72, G 11 B 5/64, G 11 B 13/04**

(54) Optical magnetic recording member.

(30) Priority: **06.02.84 JP 18253/84**
**15.03.84 JP 48205/84**

(43) Date of publication of application:
**21.08.85 Bulletin 85/34**

(45) Publication of the grant of the patent:
**18.04.90 Bulletin 90/16**

(84) Designated Contracting States:
**CH DE FR GB IT LI NL**

(56) References cited:
**EP-A-0 126 565**
**US-A-3 965 463**

**PATENT ABSTRACTS OF JAPAN, vol. 8, no. 282 (P-323)1719r, 22nd December 1984; & JP - A - 59 146 463 (CANON) 22-08-1984**

**PATENT ABSTRACTS OF JAPAN, vol. 8, no. 23 (P-251)1460r, 31st January 1984; & JP - A - 58 179 940 (NIPPON) 21-10-1983**

(73) Proprietor: **NIHON SHINKU GIJUTSU KABUSHIKI KAISHA**
**2500, Hagizono**
**Chigasaki-shi Kanagawa-ken (JP)**

(72) Inventor: **Nakamura, Kyuzo**
**No. 672-20, Yachimata Ho Yachimata-cho Inba-gun Chiba-ken (JP)**
Inventor: **Ota, Yoshifumi**
**No. 129, Yachimata Ni Yachimata-cho Inba-gun Chiba-ken (JP)**
Inventor: **Asari, Shin**
**No. 617-2, Asahi Yachimata-cho Inba-gun Chiba-ken (JP)**
Inventor: **Asaka, Tsutomu**
**No. 617-2, Asahi Yachimata-cho Inba-gun Chiba-ken (JP)**

(74) Representative: **Billington, Lawrence Emlyn et al**
**HASELTINE LAKE & CO Hazlitt House 28 Southampton Buildings Chancery Lane London WC2A 1AT (GB)**

## Description

This invention relates to an optical magnetic recording member.

Recently, a new type of optical magnetic recording medium has been investigated which is capable of high density recording and which can be recorded-upon and reproduced-from by means of a laser beam. The principle employed for reproduction is that when a polarized laser beam is either reflected at or transmitted through the surface of the magnetic recording medium, the beam is rotated in its polarization plane. Accordingly, it is desirable that this rotation angle, that is the Kerr rotation angle, be large for efficient recording and reproducing.

It has been considered hitherto that a material which can bring about an enhancing effect on the Kerr rotation angle must be optically transparent. It has been hitherto proposed for this purpose to provide on the surface of a magnetic layer of a magnetic recording medium a transparent dielectric layer such as SiO, $SiO_2$, ZnS, $Si_3N_4$, AlN, $TiO_2$, $Al_2O_3$, $Ta_2O_3$ or the like. This is dielectric material used hitherto for an optical thin film.

It has been determined that, among these materials used for increasing the Kerr rotation angle, any desired one which is comparatively large in refractive index is comparatively large in its enhancing effect upon the Kerr rotation angle. Especially in a case where reproducing the signal on a magnetic recording member is carried out by irradiating by a laser beam from the transparent substrate side of the member, it is desirable that the material is higher in its refractive index than in a case where reproduction is carried out by irradiation from the opposite or air side of the member. This is because the refractive index of glass or PMMA used for the substrate is about 1.5.

JP 58-179940 discloses an amorphous SiC layer as a protective layer for a magnetic storage body, but not as a layer enhancing the Kerr effect in a magneto-optic device.

According to the present invention there is provided a magneto-optic recording member comprising:
—a substrate;
—a magnetic layer on the substrate, capable of rotating the polarisation of optical radiation; and
—a layer of amorphous material on a surface of the magnetic layer;
characterised in that:
the amorphous layer comprises amorphous Si, amorphous Ge or amorphous SiGe and is of a thickness suitable for enhancing the angle of rotation of polarisation.

The wavelength of a laser generally used for reproducing the signal recorded on a magneto-optic recording member is about 800 nm, so that it is sufficient for the material used for increasing the Kerr rotation angle to be one which is transparent in relation to the laser wavelength of about 800 nm. It is not always necessary for the material to be so transparent over the whole range of visible radiation, as are the conventional transparent dielectric materials mentioned hereinbefore.

The inventors have examined various kinds of materials and, as a result thereof, it has been discovered that there can be obtained a very large enhancing effect on the Kerr rotation angle by using, instead of the conventional dielectric layer, a material which has a certain or predetermined value of transmission coefficient in relation to the wavelength of 800 nm and which has a refractive index as high as 3.0—3.8. This refractive index is so much greater than that of glass or PMMA that the material is suitable also for cases in which reproducing a signal recorded on a magnetic recording member is effected by irradiating a laser beam from below, i.e. from a transparent substrate side of the member.

An embodiment of the present invention may provide a magneto-optic recording member which has a larger enhancing effect on the Kerr rotation angle than a conventional member.

Amorphous Si has a very high refractive index in the range 3.0—3.8. The refractive index of amorphous Ge has not yet been fully examined, but it can be presumed that the same is larger than that of amorphous Si, from the fact that the refractive index of crystal Ge (=4.0) is larger than the refractive index of crystal Si (=3.5). In this case, amorphous Si has its optical absorption end at near 1000 nm, so that the laser beam is more or less absorbed if the wavelength thereof is 800 nm. As regards energy gap related to transmission coefficient at near 800 nm, amorphous Ge has a smaller energy gap than amorphous Si. Accordingly, it can be considered that the transmission coefficient of amorphous Ge is smaller than that of amorphous Si.

In addition, if the energy gap is increased and thereby the optical absorption end is moved towards a shorter wavelength side from near 1000 nm, the optical absorption at near 800 nm can be decreased and the Kerr rotation angle can be further increased. From this point of view, the inventors have investigated and, as a result, have found a means for increasing the energy gap of amorphous Si or amorphous Ge to result in further increasing the Kerr rotation angle.

Namely, the Kerr rotation angle may be further increased if the amorphous material of said layer is mixed i.e. doped with at least one element selected from H, C, F, N and O, in the amount of about 50 at.% or less.

The term "at.%" stands for "atomic weight percent". For example, an amorphous Ge layer containing 40 at.% H is obtained by mixing Ge and H in the ratio of 60 mols of Ge to 40 mols of H.

It is preferable that the mixing amount of the added element is 30 at.% or less.

For a better understanding of the present invention and to show how it may be put into effect, reference will now be made to the accompanying drawings, in which:

Figure 1 is a diagram showing the relationships between layer thickness and Kerr rotation angle, on the one hand for an embodying example of optical magnetic recording member according to the present invention, and on the other hand for a conventional optical magnetic recording member;

Figure 2 is a diagram showing the relationships between on the one hand additive amounts of different additive element, and on the other hand Kerr rotation angle, for embodying examples of the present invention;

Figure 3 is a diagram showing the relationships between the additive amounts of two kinds of additive elements and Kerr rotation angle in a modified example of this invention;

Figure 4 is a diagram showing the relationships between layer thickness and Kerr rotation angle in another embodying example of this invention;

Figure 5 is a diagram showing the relationships between the additive amount of each element and the Kerr rotation angle in further embodying examples of this invention;

Figure 6 is a diagram similar to Figure 3 for another modified example of this invention; and

Figure 7 is a characteristic diagram showing an alloy layer and the Kerr rotation angle for a further modified example of this invention.

An amorphous Si layer is formed on an upper surface of a transparent substrate of glass, PMMA or the like, by such a known process as a sputtering process, an RF sputtering process, a plasma CVD process, a vapor deposition process, an ion plating process, an optical CVD process or the like.

If it is intended that the amorphous Si (described hereinafter as "a—Si") is to be mixed with at least one kind of element selected from H, F, C, N and O to form a layer of a—Si:H, a—Si:F, a—SiC:H, a—SiN—H, a—SiO:H or the like, there is used an RF sputtering process or a plasma CVD process in which a single gas such as $H_2$ gas, $N_2$ gas, $SiH_4$ gas, $SiF_4$ gas or a mixture thereof is introduced into a treatment container. In order to mix therein, there is used such a target that a large number of graphite pellets are placed on an Si target. Thereafter, the resultant layers thus prepared, that is, the a—Si layer, the a—Si:H layer or other a—Si layers mixed with one kind of the elements, are provided on their surfaces with a 25 at.% Tb—Fe film (1000 Å) (10 Å = 1 nm) as a magnetic recording film and are additionally provided thereon with an $SiO_2$ film of 1000 Å serving as a protection film.

In order to examine the relationships between layer thickness and Kerr rotation angle, in respect of each sample of the foregoing magnetic recording members having respectively, the a—Si layer, the a—Si:H layer and others, there are prepared various samples which are different in thickness. For measuring the Kerr rotation angle, there is used a semiconductor laser of 830 nm wavelength. In addition, there are prepared respective samples which have neither a Tb—Fe film nor the $SiO_2$ film formed on the respective a—Si layer, a—Si:H layer and others, and each such sample is used for measuring optical absorption coefficient and refractive index.

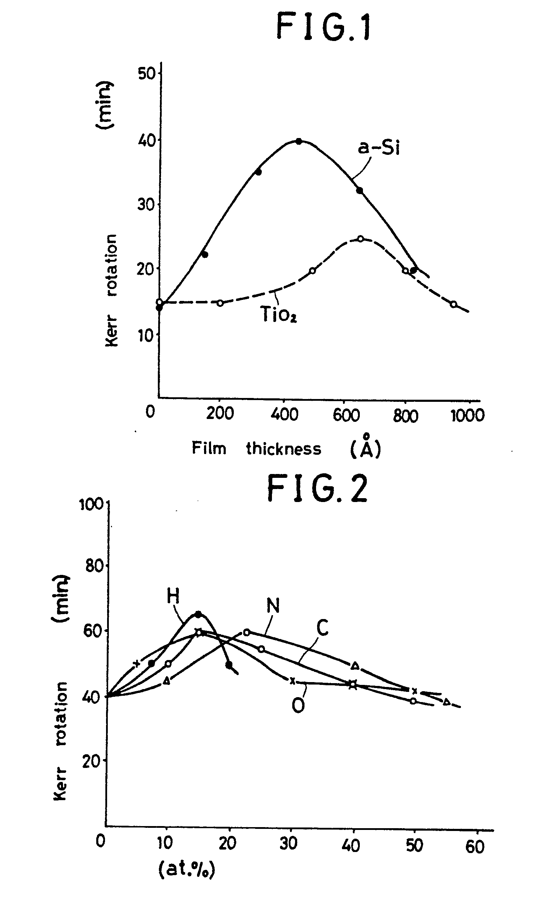

Figure 1 shows the relationship between change of the thickness of the a—Si layer and change of the Kerr rotation angle thereof. For comparison purposes, there is also shown the results of measurements carried out on a conventional magnetic recording member provided with a $TiO_2$ layer (which is one example of conventional dielectrics) formed on the substrate.

As will be clear from Fig. 1, it can be appreciated that the Kerr rotation angle is about 15 min. when the sample has only the Tb—Fe film provided with no enhancing layer, but the Kerr rotation angle is increased to 40 min., at maximum, with the samples each provided with the a—Si layer. It can also be appreciated that the Kerr rotation angle is only 25 min., at maximum, with the sample provided with the conventional $TiO_2$ dielectric, and that the samples provided with the a—Si layer are excellent in increasing the Kerr rotation angle over the whole range of the change of the thickness thereof, as compared with the conventional dielectric layer.

The layer thickness showing the maximum Kerr rotation angle is 650 Å in the case of the $TiO_2$ layer, while the same is 450 Å in the case of the a—Si layer. This is based on the fact that the refractive index of the $TiO_2$ is 2.3, while that of the a—Si is 3.7.

The optical absorption coefficient of only the a—Si layer of 450 Å, which causes the maximum rotation angle, is measured to find out that the same is 10% in relation to a laser beam of 830 nm wavelength.

It has been confirmed that, for lowering the optical absorption coefficient, it is effective to add to the a—Si layer at least one of the elements H, C, O, N. The relationship between the amount of the element to be added and the Kerr rotation angle has been examined.

Figure 2 shows the resultant relationships therebetween at such a constant thickness of the a—Si layer (that is 450 Å) which can offer the maximum value of the Kerr rotation angle.

In this case the composition of the amorphous layer was $Si_{100-x}M_x$ where M is H, N, C, or O. It can be appreciated from this Figure that, in respect of any of the additive elements H, N, C, O, the Kerr rotation angle is increased as the additive amount of the element is increased, and after reaching a maximum rotation angle at about 10—30 at.% of the additive amount, the rotation angle is gradually decreased, and is maintained above 40 min. until the additive amount of the element becomes about 50 at.%.

This means that, in a smaller region of the additive amounts, the optical absorption coefficient is decreased, and this decrease acts to enhance the Kerr rotation angle, and if the additive amount is increased to more than about 50 at.%, the optical absorption amount becomes nearly zero, but the refractive index is lowered and in accordance therewith the Kerr rotation angle is gradually decreased.

It has been also confirmed that, in a case where two or more of the elements are mixed, there is an increase in the Kerr rotation angle.

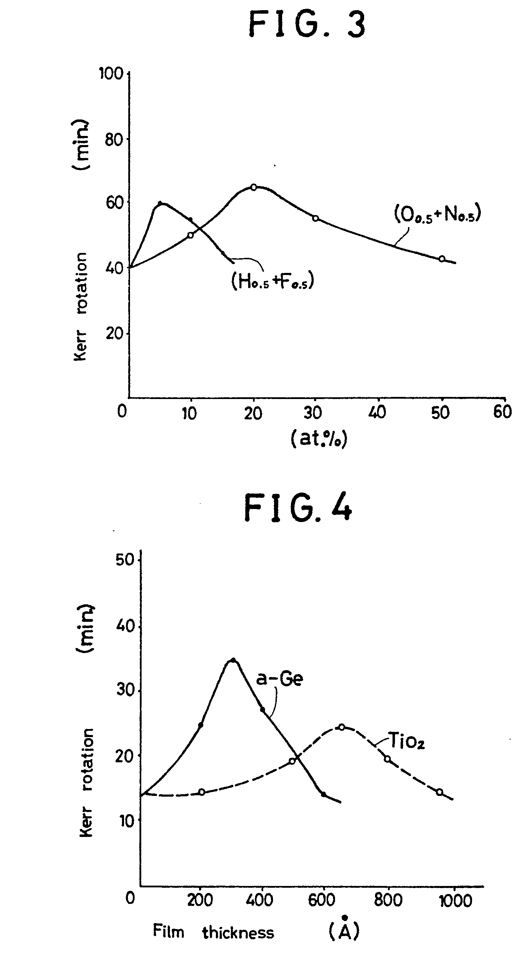

Figure 3 shows the results of the addition of two elements together. In this Figure, the two added elements (O and N, or H and F) in each of the respective examples are equal to each other in mixing ratio amount. Thus, in this case, the composition of the amorphous layer was $Si_{100-x}M_x$ where $M=O_{50}N_{50}$ or $H_{50}F_{50}$.

Any of the foregoing elements thus added has a strong bonding force with the Si atom thereof, and thereby the energy gap is increased.

The above experiments have been made on an optical magnetic recording member in which reproducing a signal recorded thereon is carried out by irradiating the laser beam from the transparent substrate side of the member. However, the Kerr angle enhancement as described can also be employed in a member which is reproduced from the opposite or air side of the member, and also a member in which a Kerr rotation angle increasing layer (an enhancing layer) is so interposed between a semi-transparent magnetic layer and an opposite side layer as to be used for both a Faraday rotation and a Kerr rotation. In such members an a—Si layer or an a—Si layer mixed with at least one of the elements H, C, N, F, O can be used for making respective enhancing layers thereof which are improved very effectively as regards their Kerr effect.

The substrate for fixing the foregoing enhancing layer is not limited to being a transparent layer, but may also be a nontransparent layer made of organic or inorganic material.

Figures 4—6 show properties of other examples of this invention in which an amorphous Ge layer is used as a Kerr rotation angle enhancing layer. As shown in Figure 4, there can be obtained a Kerr rotation angle which is larger than that obtained in a conventional case using a dielectric layer as an enhancing layer. Figure 4 shows the results of measuring the Kerr rotation angles of various samples of optical magnetic recording members comprising Tb—Fe magnetic layers formed on respective substrates. The magnetic layers are provided thereon either with conventional $TiO_2$ dielectric layers of different thicknesses, or with amorphous Ge layers (described hereinafter as "a—Ge layers") of different thicknesses. The Kerr rotation angle in the case of samples having the Tb—Fe layer alone without an enhancing layer is about 15 min., but the same can be increased to 35 min. at maximum in the case of the samples provided with the a—Ge layer. By comparison, the Kerr rotation angle is only 25 min., at maximum, in the case of the samples provided with the conventional $TiO_2$ layer. The a—Ge layer is effective where the thickness thereof is below about 600 Å, and the layer thickness thereof giving the maximum Kerr rotation angle is about 350 Å. Thus, the a—Ge layer is advantageous and more effective in enhancing Kerr effect at a thickness which is smaller than the $TiO_2$ layer thickness (650 Å) giving the maximum Kerr rotation angle.

Additionally, through many experiments in which the a—Ge layer is supplemented with various kinds of elements, it has been found that by the addition of H, C, O, N, F, the resultant mixture layer of a—Ge and the element can be decreased in its optical absorption coefficient and can be increased in its Kerr rotation angle.

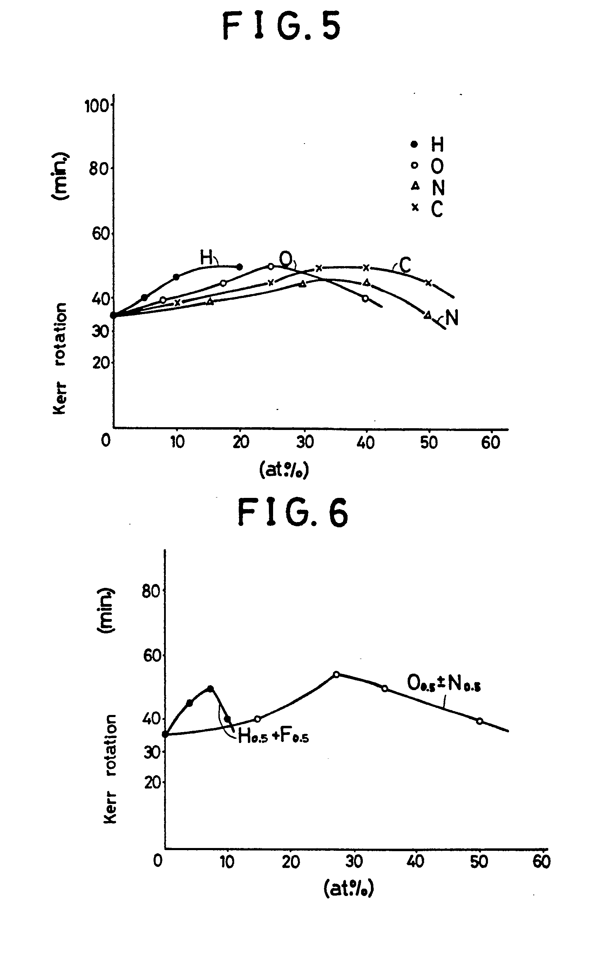

Figure 5 shows the change of Kerr rotation angle obtained by changing the additive amount of each of the elements H, C, O, N in an a—Ge layer of 300 Å thickness. In this case, the composition of the amorphous layer was $Ge_{100-x}M_x$ where M is H, N, C or O.

As will be clear therefrom, the Kerr rotation angle is increased as the additive amount of each element is increased, but the enhancing effect caused by the addition of the element declines from a certain additive amount thereof, and the addition of the element is effective until about 50 at.%. This means that, at a comparatively small region of the additive amount, the lowering of the optical absorption amount serves to enhance the Kerr rotation angle, and if the additive amount is increased to more than about 50 at.%, the optical absorption amount becomes nearly zero, but the refractive index is lowered and in accordance therewith the Kerr rotation angle is gradually decreased. Each of the indicated elements has a strong bonding force in relation to the Ge atom, and thus the same can serve to increase the energy gap.

Accordingly, almost the same result can be obtained even if two or more of the elements are simultaneously added to the amorphous layer. Some related experimental results are as shown in Figure 6. In this case the composition of the amorphous layer was $Ge_{100-x}M_x$ where $M=O_{50}N_{50}$ or $H_{50}F_{50}$. Namely, the same shows the Kerr enhancing effect of respective a—Ge layers of 300 Å in thickness supplemented in one case with H and F in a mixing ratio of 1:1, and in another case with O and N with a mixing ratio of 1:1, respectively, while the mixing additive amounts thereof in the a—Ge amount are varied. Thus, it can be appreciated from Figures 5 and 6 that the Kerr rotation angle can be better increased where at least one of the elements H, F, C, O, N is added to the a—Ge layer with an amount of below about 50 at.%.

The foregoing examples show the results of the enhancing effect on the Kerr rotation angle caused by a single layer of a—Si, or of a—Ge.

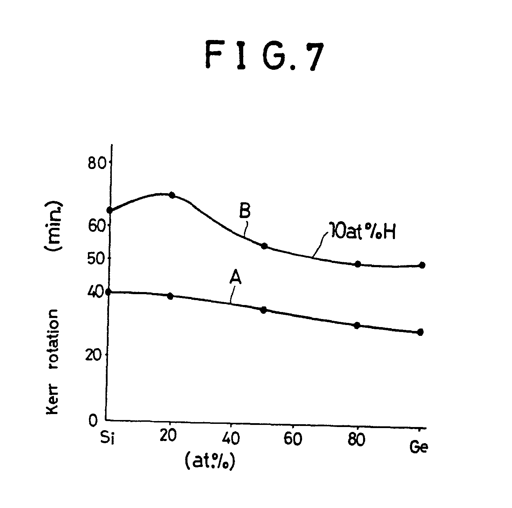

However, Si and Ge show almost the same semiconductor characteristics, and it is possible to prepare therefrom an amorphous Ge.Si alloy in any desired mixing ratio thereof. In Figure 7, a curve A shows the results of measuring the Kerr rotation angles of samples provided with Ge.Si layers prepared with the components Ge and Si alloyed in various proportions over the whole alloy composition range thereof. The thicknesses of the resultant Ge.Si alloy layers are made constant at 350 Å. In addition, in Figure 7 a curve B shows the results of measuring the Kerr rotation angles of samples provided with Ge.Si:H layers prepared in that the same Ge.Si alloy layers as above are supplemented with H of 10 at.%. As will be clear therefrom, it can be appreciated that the amorphous Ge.Si layer has almost the same enhancing effect as the amorphous Ge layer, and the enhancing effect is more increased where the foregoing layer is supplemented with H. Though not illustrated, it has been confirmed that almost the same enhancing effect can be obtained also by the addition of any of the elements C, O, N, F other than H. This amorphous Ge.Si layer has a peak value of about 70—50 min. of Kerr rotation angle, in the two cases where the thickness thereof is about 350 Å and about 1200 Å respectively.

As a result of examining the relationships between the additive amount of any of the aforementioned elements and the optical absorption property of the a—Ge layer or of the a—(Ge.Si) layer, it has been found that as the element is added, the optical absorption end of the layer is moved towards the shorter side of the wavelength of the laser, until its additive amount is in the range of about 5—40 at.%, and the absorption of 800 nm wavelength radiation is decreased, and in accordance therewith the Kerr rotation angle is increased. However, if the additive amount of the element is above about 40 at.%, the refractive index is decreased, and in accordance therewith an increasing effect on the Kerr rotation angle by the addition of the element is also decreased.

The foregoing amorphous Ge layer or amorphous Ge.Si layer may be formed by almost the same process as any of the processes described in the case of forming the foregoing amorphous Si layer. A process for mixing at least one of the elements F, H, C, N, O may be also carried out in almost the same manner as that described in the foregoing case. However, it can be also carried out by a combination of one or more of the foregoing processes, with the plasma CVD process using a mixture gas of $GeH_4$ and $GeF_4$ or the like.

For forming the amorphous Si.Ge layers in the foregoing examples with varied composition ratios thereof, there are used Si.Ge complex targets of various area ratios. The foregoing examples are all prepared in such a way that a glass plate is used for the substrate, and after a—Ge layers or a—Ge.Si layers of various thicknesses are formed on the respective glass substrates, a 25 at.% Tb—Fe film of 1000 Å thickness is formed on each a—Ge layer thereof, and additionally an $SiO_2$ film of 1000 Å thickness is formed thereon as a protection film.

For measuring the Kerr rotation angle, there is used a semiconductor laser of 830 nm wavelength, and the results thereof are those obtained by measuring from the glass substrate side.

Thus, according to this invention, an amorphous Si layer, an amorphous Ge layer or an amorphous Ge.Si layer is used for an enhancing layer, so that there can be obtained an optical magnetic recording member which is increased in its Kerr effect. If, additionally, any of these layers is supplemented by at least one of the elements H, F, C, O, N at an amount of below about 50 at.%, there can be obtained an optical magnetic recording member which is further increased in its Kerr effect.

## Claims

1. A magneto-optic recording member comprising:
   —a substrate;
   —a magnetic layer on the substrate, capable of rotating the polarisation of optical radiation; and
   —a layer of amorphous material on a surface of the magnetic layer;
   characterised in that:
   the amorphous layer comprises amorphous Si, amorphous Ge or amorphous SiGe and is of a thickness suitable for enhancing the angle of rotation of polarisation.

2. A magneto-optic recording member as claimed in claim 1, wherein the amorphous material layer is doped with at least one element selected from H, C, F, N and O, in an amount of below 50 at.%.

3. A magneto-optic recording member as claimed in claim 2, wherein the mixing amount of the element is below about 30 at.%.

4. A magneto-optic recording member as claimed in any preceding claim, wherein the amorphous material has a refractive index of between 3.0 and 3.8 and has a predetermined value of transmission coefficient also in relation to the wavelength of a laser beam constituting the optical radiation.

5. A magneto-optic recording member as claimed in any preceding claim, wherein the amorphous layer is Si of a thickness of about 45 nm.

6. A magneto-optic recording member as claimed in any of claims 1 to 4, wherein the amorphous layer is Ge of a thickness of about 30 nm.

7. A magneto-optic recording member as claimed in any of claims 1 to 4, wherein the amorphous layer is Ge.Si of a thickness of about 35 nm.

8. A magneto-optic recording member as claimed in any preceding claim and having an amorphous layer as aforesaid on top of the magnetic layer.

9. A magneto-optic recording member as claimed in any preceding claim and having an amorphous layer as aforesaid between the magnetic layer and a transparent substrate.

10. A magneto-optic recording member as claimed in any preceding claim, in which the magnetic layer comprises Tb—Fe.

## Patentansprüche

1. Magneto-optischer Aufzeichnungsträger bestehend aus:
   einem Substrat, einer magnetischen Schicht auf dem Substrat, die fähig ist, die Polarisation von optischer Strahlung zu drehen, und
   einer Schicht aus amorphem Material auf einer Fläche der magnetischen Schicht,
   dadurch gekennzeichnet,
   daß die amorphe Schicht amorphes Si, amorphes Ge oder amorphes SiGe aufweist und deren.

Dicke geeignet ist, den Polarisations-Drehwinkel zu erhöhen.

2. Magneto-optischer Aufzeichnungsträger gemäß Anspruch 1, bei dem die amorphe Materialschicht mit wenigstens einem Element ausgewählt aus H, C, F, N und O in einer Menge unter 50 Atomprozent dotiert ist.

3. Magneto-optischer Aufzeichnungsträger gemäß Anspruch 2, bei dem die Menge des einzumischenden Elements unter 30 Atomprozent beträgt.

4. Magneto-optischer Aufzeichnungsträger gemäß einem jeden der vorangehenden Ansprüche, bei dem das amorphe Material einen Berechnungsindex zwischen 3,0 und 3,8 aufweist und einen vorgegebenen Wert für den Transmissionskoeffizienten auch in Bezug zur Wellenlänge eines die optische Strahlung bildenden Laserstrahls hat.

5. Magneto-optischer Aufzeichnungsträger gemäß einem jeden der vorangehenden Ansprüche, bei dem die amorphe Schicht aus Si in einer Dicke von etwa 45 nm besteht.

6. Magneto-optischer Aufzeichnungsträger gemäß einem jeden der Ansprüche 1 bis 4, bei dem die amorphe Schicht aus Ge in einer Dicke von etwa 30 nm besteht.

7. Magneto-optischer Aufzeichnungsträger gemäß einem jeden der Ansprüche 1 bis 4, bei dem die amorphe Schicht aus Ge.Si in einer Dicke von etwa 35 nm besteht.

8. Magneto-optischer Aufzeichnungsträger gemäß einem jeden der vorangehenden Ansprüche, bei dem die genannte amorphe Schicht auf der Oberseite der magnetischen Schicht vorliegt.

9. Magneto-optischer Aufzeichnungsträger gemäß einem jeden der vorangehenden Ansprüche und mit einer wie vor ausgebildeten amorphen Schicht zwischen der magnetischen Schicht und einem transparenten Substrat.

10. Magneto-optischer Aufzeichnungsträger gemäß einem jeden der vorangehenden Ansprüche, bei der die magnetische Schicht Tb—Fe aufweist.

**Revendications**

1. Un support d'enregistrement magnéto-optique comprenant:
—un substrat;
—une couche magnétique sur le substrat, capable de faire tourner la polarisation du rayonnement optique; et
—une couche de matériau amorphe sur une surface de la couche magnétique;
caractérisé en ce que:
la couche amorphe comprend du Si amorphe, du Ge amorphe ou du SiGe amorphe et elle est d'une épaisseur appropriée pour augmenter l'angle de rotation de polarisation.

2. Un support d'enregistrement magnéto-optique selon la revendication 1, où la couche de matériau amorphe est complétée par au moins un élément sélectionné parmi H, C, F, N et O, dans une quantité inférieure à 50 at.%.

3. Un support d'enregistrement magnéto-optique selon la revendication 2, où la quantité de mélange de l'élément est inférieure à environ 30 at.%.

4. Un support d'enregistrement magnéto-optique selon l'une quelconque des revendications précédentes, où le matériau amorphe a un indice de réfraction compris entre 3,0 et 3,8 et a une valeur prédéterminée de coefficient de transmission également par rapport à la longueur d'onde d'un faisceau laser constituant le rayonnement optique.

5. Un support d'enregistrement magnéto-optique selon l'une quelconque des revendications précédentes, où la couche amorphe est de Si d'une épaisseur d'environ 45 nm.

6. Un support d'enregistrement magnéto-optique selon l'une quelconque des revendications 1 à 4, où la couche amorphe est de Ge d'une épaisseur d'environ 30 nm.

7. Un support d'enregistrement magnéto-optique selon l'une quelconque des revendications 1 à 4, où la couche amorphe est de Ge.Si d'une épaisseur d'environ 35 nm.

8. Un support d'enregistrement magnéto-optique selon l'une quelconque des revendications précédentes et ayant une couche amorphe comme susmentionné par dessus la couche magnétique.

9. Un support d'enregistrement magnéto-optique selon l'une quelconque des revendications précédentes et ayant une couche amorphe comme susmentionné entre la couche magnétique et un substrat transparent.

10. Un support d'enregistrement magnéto-optique selon l'une quelconque des revendications précédentes, où la couche magnétique comprend du Tb—Fe.

EP 0 152 269 B1

FIG.1

FIG.2

1

# FIG. 3

# FIG. 4

EP 0 152 269 B1

F I G. 5

F I G. 6

3

# F I G. 7